# EUROPÄISCHE PATENTSCHRIFT

(11) **EP 0 812 486 B1**
(45) Veröffentlichungstag und Bekanntmachung des Hinweises auf die Patenterteilung: **05.01.2000**
(21) Anmeldenummer: 96945535.1
(22) Anmeldetag: 24.10.1996
(51) Int. Cl.: H02G 3/22

(54) **TEMPERATURFESTE KABELDURCHFÜHRUNG UND VERFAHREN ZU DEREN HERSTELLUNG**
TEMPERATURE-RESISTANT CABLE LEAD-THROUGH DUCT AND METHOD OF MANUFACTURING THE SAME
PASSAGE DE CABLE RESISTANT AUX TEMPERATURES ELEVEES ET PROCEDE DE FABRICATION CORRESPONDANT

(30) Priorität: 15.11.1995 DE 19542650
(43) Veröffentlichungstag der Anmeldung: 17.12.1997
(73) Patentinhaber: ROBERT BOSCH GMBH, 70442 Stuttgart (DE)
(72) Erfinder: WEYL, Helmut, D-71701 Schwieberdingen (DE)
(86) Internationale Anmeldenummer: DE9602051
(87) Internationale Veröffentlichungsnummer: WO9718610

(56) Entgegenhaltungen:
- CH-A- 675 179
- DE-A- 4 126 378
- US-A- 4 019 974
- US-A- 5 213 290

## Beschreibung

### Stand der Technik

Die Erfindung betrifft eine temperaturfeste, dichte Kabeldurchführung in einem Gehäuse, insbesondere in einem Gehäuse eines Gassensors, nach dem Oberbegriff des Anspruchs 1 sowie ein Verfahren zur Herstellung der Kabeldurchführung.

Dichte und hochtemperaturfeste Kabeldurchführungen werden beispielsweise bei Gassensoren, insbesondere bei Lambda-Sonden benötigt. Diese Gassensoren besitzen ein Gehäuse, in dem ein Sensorelement angeordnet ist. Das Sensorelement wird innerhalb des Gehäuses mit Anschlußkabeln kontaktiert. Die Anschlußkabel werden durch eine Kabeldurchführung aus dem Gehäuse herausgeführt. Die Gassensoren zur Bestimmung der Abgaszusammensetzung bei Kraftfahrzeugen sind im Abgasrohr eingesetzt und sind dadurch den dort herrschenden Umgebungseinflüssen ausgesetzt. Das im Gehäuse angeordnete Sensorelement arbeitet in der Regel mit Referenzluft, die beispielsweise über die Kabelisolation ins Innere des Gehäuses eingeleitet wird. Andererseits ist es jedoch erforderlich, daß das im Gehäuse angeordnete Sensorelement nicht mit beeinträchtigenden Umgebungseinflüssen, wie Schmutz, Öl und/oder Wasser in Berührung kommt. Dazu ist es notwendig, die Kabeldurchführung sowohl zum Gehäuse hin als auch zur Kabelisolation hin dicht auszuführen.

Aus der US-A-5,213,290 ist eine Kabeldurchführung mit einem in einem Gehäuse angeordneten Formkörper, durch den ein Anschlußkabel mit einem elektrischen Leiter und Kabelisolierung geführt ist, bekannt. Der Formkörper ist mit einer Ringnut ausgeführt, die sich von einer Stirnseite ausgehend axial im Formkörper erstreckt. Die Ringnut hat dabei lediglich die Aufgabe, den zylindrischen Bereich des Formkörpers elastisch auszubilden, damit der Formkörper das Anschlußkabel spaltfrei umfaßt.

Aus der DE-41 26 378 A 1 ist ferner eine Kabeldurchführung bekannt, bei der Anschlußkabel durch ein elastisches stopfenartiges Formteil geführt sind. Das Formteil ist aus einem temperaturfesten Material, zum Beispiel aus PTFE (Teflon) gefertigt und wird von einer das Gehäuse bildenden Gehäusehülse umfaßt und zusammengepreßt. Zum Abdichten zwischen Gehäusehülse und Formteil ist zusätzlich ein O-Ring eingesetzt. Der O-Ring besteht aus einem Elastomer, beispielsweise Viton, und hat lediglich eine begrenzte Temperaturbelastung. Die Anwendung dieser Kabeldurchführung bei höheren Temperaturen, die beispielsweise vorliegen, wenn der Gassensor sehr nahe am Auslaß des Motors angeordnet wird, hat somit hinsichtlich der Temperaturbeständigkeit der Dichtung seine Grenzen.

### Vorteile der Erfindung

Die Erfindung mit den kennzeichnenden Merkmalen des Hauptanspruchs hat demgegenüber den Vorteil, daß die Kabeldurchführung eine temperaturbeständige, dauerhafte und zuverlässige Abdichtung gewährleistet. Durch die ausgebildete Zylinderwand wird erreicht, daß das Material des Formkörpers bei der Erwärmung nicht zu stark fließt, sondern seine Lage zwischen Stützring und dem Gehäuse beibehält.

Die die in den Unteransprüchen aufgeführten Maßnahmen sind vorteilhafte Ausführungen und Weiterbildungen der Erfindung möglich. Um die Fließfähigkeit des Materials des Formkörpers bei höheren Temperaturen zu begrenzen, ist es vorteilhaft, die Wandstärke des Formkörpers zwischen Ringnut und Gehäusehülse möglichst klein zu halten. Eine besonders geignete dichte Verbindung zwischen Formkörper und Kabelisolation ist dadurch erreichbar, wenn beide Teile wenigstens teilweise aus dem gleichen Material gefertigt sind. Als besonders geeignetes Material eignet sich PTFE (Teflon). Dieses Material bietet den Vorteil der hohen Temperaturbeständigkeit bei gleichzeitig hohem Dichtvermögen.

### Zeichnung

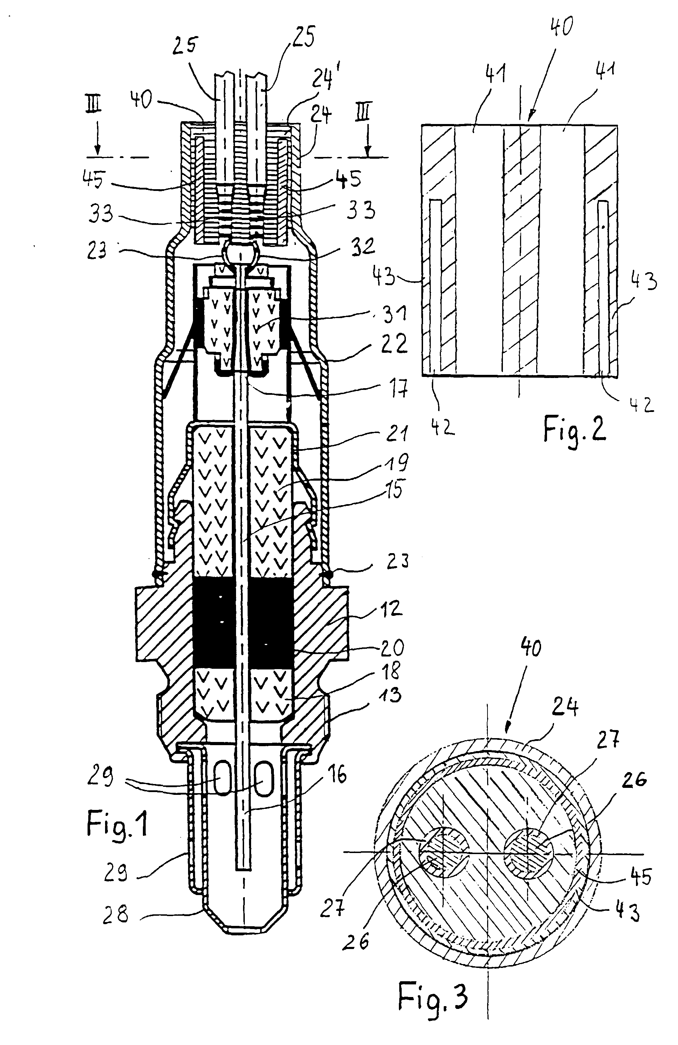

Ein Ausführungsbeispiel der Erfindung ist in der Zeichnung dargestellt und in der nachfolgenden Beschreibung näher erläutert. Es zeigen Figur 1 eine Schnittdarstellung eines Gassensors, Figur 2 eine Schnittdarstellung eines Formkörpers für eine erfindungsgemäße Kabeldurchführung und Figur 3 eine Schnittdarstellung durch die Kabeldurchführung des Gassensors nach den Linien III-III gemäß Figur 1.

### Ausführungsbeispiel

Figur 1 zeigt einen Gassensor 10, beispielsweise einen elektrochemischen Sauerstoffsensor, mit einem metallischen Gehäuse 12, das ein Gewinde 13 als Befestigungsmittel für den Einbau in ein nicht dargestelltes Meßgasrohr aufweist. Im Gehäuse 12 ist ein Sensorelement 15 mit einem meßgasseitigen Endabschnitt 16 und einem anschlußseitigen Endabschnitt 17 angeordnet. Das Sensorelement 15 ist im Gehäuse 12 mittels eines ersten Keramikformteils 18 und eines zweiten Keramikformteils 19 und einer zwischen den beiden Keramikformteilen 18, 19 angeordneten Sensorelementdichtung 20 gehalten. Das erste Keramikformteil 18 sitzt axial auf einer Schulter des Gehäuses 12 auf. Auf das zweite Keramikformteil 19 wirkt eine Druckhülse 21, die in am Gehäuse 12 angeordnete Einrastungen eingreift. Mittels der Druckhülse 21 wird Druck auf die Sensorelementdichtung 20 ausgeübt, so daß sich das vorgesinterte Dichtpulver an der Wand des Gehäuses 12 und am Sensorelement 15 anlegt und so eine ausreichende Dichtwirkung erzeugt.

Am meßgasseitigen Ende des Gehäuses 12 ist ein Schutzrohr 28 mit Ein-/Auslaßöffnungen 29 für das Meßgas befestigt. In das Schutzrohr 28 ragt der meßgasseitige Endabschnitt 16 des Sensorelements 15 hinein.

Am anschlusseitigen Endabschnitt 17 des Sensorelements 15 befinden sich nicht sichtbare Sensorelementkontakte für Elektroden und gegebenenfalls einen Heizer. Diese Kontakte werden beispielsweise mittels eines zweiteiligen Steckers 31 kontaktiert. Der Stecker 31 verfügt entsprechend der Anzahl der Sensorelementkontakte über Kontaktteile 32 mit jeweils einem Crimpkontakt 33. Die Crimpkontakte 33 sind mit Anschlußkabeln 25 mit jeweils einem elektrischen Leiter 26 und einer Kabelisolation 27 verbunden. Als Material für die Kabelisolation 27 wird beispielsweise PTFE (Teflon) verwendet.

Der Stecker 22 ist ferner von einer metallischen Gehäusehülse 22 umgeben, die mit dem Gehäuse 12 gasdicht verschweißt ist. An dem zum Gehäuse 12 gegenüberliegenden Ende ist die Gehäusehülse 22 mit einem sich beispielsweise verjüngenden Abschitt 24 mit einer kreisförmigen Offnung 24' versehen. In der Öffnung 24' der Gehäusehülse 22 befindet sich ein Formkörper 40 aus temperaturfestem Material, beispielsweise aus PTFE (Teflon).

Durch die Verwendung von glasfasergefülltem Teflon können die mechanischen Eigenschaften des Formkörpers 40 verbessert werden, wobei gegebenenfalls auch eine inhomogene Glasfaserfüllung denkbar ist, so daß im Bereich der Grenzflächen zwischen Kabelisolationsmantel und Formkörper reines PTFE vorliegt.

Der Formkörper 40 hat gemäß Figur 2 und 3 beispielsweise zwei zylindrische Durchführungen 41 zum Durchführen der Anschlußkabel 25. Bei beheizten Sensorelementen 15 sind neben den Elektrodenkontakten zusätzlich Heizerkontakte vorgesehen, wodurch vier Anschlußkabel zum Sensorelement 15 geführt werden müssen. In diesem Fall sind selbstverständlich vier zylindrische Durchführungen 41 notwendig. Es sind darüberhinaus aber auch Anwendungen mit mehr als vier Anschlußkabeln denkbar.

Der Formkörper 40 hat ferner an der in die Gehäusehülse 22 weisenden Stirnseite eine sich axial erstreckende Ringnut 42, so daß sich an dem zur Gehäusehülse 22 weisenden Bereich des Formkörpers 40 eine Zylinderwand 43 ausgebildet. Die Wandstärke der Zylinderwand 43 ist zweckmäßigerweise geringer als die kleinste sich zwischen Ringnut 42 und Durchführung 41 ausbildende Wandstärke. Es ist jedoch auch denkbar, die Ringnut 42 von der entgegengesetzten Seite in den Formkörper 40 einzubringen, so daß die Ringnut 42 nach außen weist. Die Ringnut 42 kann beispielsweise mittels eines Kernlochbohrers hergestellt werden. Die Wandstärke der Zylinderwand 43 wird möglichst klein gewählt, beispielsweise 0,2 bis 1 mm, vorzugsweise 0,5 mm. In der Ringnut 42 befindet sich gemäß Figur 1 und 3 ein rohrförmiger, metallischer Stützring 45.

Zur Herstellung der Kabeldurchführung werden zunächst die Anschlußkabel 25 durch die zylindrischen Durchführungen 41 geführt und mit den Crimpkontakten 43 der entsprechenden Kontaktteile 32 verbunden. Die Crimpkontakte 33 werden in die Durchführungen 41 zurückgeschoben, so daß die Crimpkontakte 33 im Formkörper integriert sind. Dadurch wirkt der Formkörper 40 gleichzeitig als Zugentlastung für die Anschlußkabel 25. Danach wird der Formkörper 40 mit den eingeführten Anschlußkabeln 25 von einem nicht näher dargestellten Fertigungswerkzeug umklammert, wobei das Fertigungswerkzeug in Form einer Hülse oder in Form von zwei Spannbacken ausgebildet sein kann. Anschließend wird der Formkörper 40 beispielsweise in einem Ofen erhitzt, wobei sich der Formkörper 40 und die Kabelisolation 27 ausdehnen. Die eventuell vorhandenen Ringspalte um die Kabelisolationen 27 werden dabei geschlossen. Während des Erwärmens auf beispielsweise 370 °C wird mittels des Fertigungswerkzeugs Druck auf den Formkörper 40 ausgeübt. Bei der Erwärmung des Formkörpers 40 wird das Teflon-Material teigförmige und läßt sich aufgrund des einwirkenden Drucks entsprechend verformen, so daß sich die Grenzflächen zwischen Kabelisolation 27 und Formkörper 40 formschlüssig umfassen und dabei anschmelzen bzw. miteinander verschmelzen. Hierdurch ergibt sich die gewünschte dichte Verbindung zwischen Formkörper 40 und Kabelisolation 27.

Als nächster Schritt wird der Stützring 45 in die Ringnut 42 eingeschoben. Es ist aber auch möglich, daß An- bzw. Verschmelzen des Formkörpers 40 mit der Kabelisolation 27 bereits mit eingesetztem Stützring 45 durchzuführen. Nachdem das Formteil 40 seine Position in der Öffnung 24 der Gehäusehülse 22 erhalten hat, wird mit einem nicht näher dargestellten Werkzeug von außen auf den Endabschnitt 24 der Gehäusehülse 22 derart eingewirkt, daß der Formkörper 40 mit der Gehäusehülse 22 verstemmt wird. Beim Verstemmen des Formkörpers 40 bildet der in die Ringnut 42 eingesetzte Stützring 45 ein entsprechendes Gegenlager für die zum Verstemmen aufgewandte Kraft. Gleichzeitig wird durch die dünnwandige Ausbildung der Zylinderwand 43 gewährleistet, daß bei einer Temperaturbelastung, bei der das Teflon-Material des Formkörpers 40 einen teigigen Zustand annimmt, das Teflon-Material nicht zu stark fließt, sondern seine Lage zwischen dem Stützring 22 und der Innenwand des Abschnitts 24 beibehält. Das Teflon-Material des Formkörpers 40 dehnt sich zwar bei Erwärmung über 250°C entsprechend aus; es geht aber nach der Abkühlung wieder zurück in seinen ursprünglichen Zustand, ohne eine nennenswerte Schwindung. Dieses Verhalten zeigt das Teflon-Material bei sich wiederholenden Temperaturwechseln. Folglich ist die Kabeldurchführung besonders für Anwendungen im Hochtemperaturbereich einsetzbar, beispielsweise an Gassensoren, die in Abgasanlagen von Verbrennungsmotoren eingesetzt werden.

Die vorliegende Erfindung ist nicht auf die Anwendung bei Gassensoren beschränkt, sondern ist genauso für andere Abdichtungen im Hochtemperaturbereich geeignet.

## Patentansprüche

1. Kabeldurchführung in einem Gehäuse, insbesondere für einen Gassensor, mit einem im Gehäuse angeordneten Formkörper, durch den mindestens ein Anschlußkabel mit einem elektrischen Leiter und einer Kabelisolation geführt ist, wobei der Formkörper mit einer Ringnut ausgeführt ist, die sich von einer Stirnseite ausgehend axial im Formkörper erstreckt, dadurch gekennzeichnet, daß die Ringnut (42) am Formkörper (40) zum Gehäuse (22) hin eine Zylinderwand (43) ausbildet und daß in der Ringnut (42) ein Stützring (45) angeordnet ist.

2. Kabeldurchführung nach Anspruch 1, dadurch gekennzeichnet, daß der Formkörper (40) entsprechend der Anzahl der durchzuführenden Anschlußkabel (25) axial verlaufende Durchführungen (41) aufweist.

3. Kabeldurchführung nach Anspruch 1, dadurch gekennzeichnet, daß die Wandstärke der Zylinderwand (43) 0,2 bis 1 mm beträgt.

4. Kabeldurchführung nach Anspruch 1, dadurch gekennzeichnet, daß der Formkörper (40) und die Kabelisolation (27) der Anschlußkabel (25) wenigstens teilweise aus dem gleichen Material bestehen.

5. Kabeldurchführung nach Anspruch 4, dadurch gekennzeichnet, daß der Formkörper (40) und die Kabelisolation (27) wenigstens teilweise aus Teflon (PTFE) bestehen.

6. Kabeldurchführung nach Anspruch 4, dadurch gekennzeichnet, daß die Materialien des Formkörpers (40) und der Kabelisolation (27) angeschmolzen oder miteinander verschmolzen sind, derart, daß eine dichte Verbindung entsteht.

7. Verfahren zur Herstellung einer hochtemperaturfesten, dichten Kabeldurchführung für ein Gehäuse (22), insbesondere für einen Gassensor, mit einem im Gehäuse angeordneten Formkörper (40), durch den mindestens ein Anschlußkabel (25) mit einem elektrischen Leiter und einer Kabelisolation (27) geführt ist, dadurch gekennzeichnet, daß der Formkörper (40) mit eingesetztem Anschlußkabel (25) außerhalb der am Gehäuse (22) vorgesehenen Montagestelle einer Wärmebehandlung ausgesetzt wird, derart, daß die Kabelisolation (27) mit dem Formkörper (40) an- bzw. vermelzen kann, daß danach der Formkörper (40) mit einem in eine im Formkörper ausgeführte Ringnut (42) eingesetzten Stützring (45) am Gehäuse (22) in Montageposition gebracht wird, und daß in der Montageposition das Gehäuse (22) derart verpreßt wird, daß sich der Formkörper (40) im Gehäuse (22) gasdicht verstemmt.

8. Verfahren nach Anspruch 7, dadurch gekennzeichnet, daß das An- bzw. Verschmelzen unter Druck durchgeführt wird.

## Claims

1. Cable bushing in a housing, in particular for a gas sensor, having a moulded part which is arranged in the housing and through which at least one connecting cable having an electric conductor and a cable insulation is guided, the moulded part being designed with an annular grove which extends axially in the moulded park in a fashion proceeding from an end face, characterized in that the annular groove (42) on the moulded part (40) forms a cylindrical wall (43) towards the housing (22) and in that a support ring (45) is arranged in the annular grove (42).

2. Cable bushing according to Claim 1, characterized in that the moulded part (40) has axially extending bushings (41) in accordance with the number of the connecting cables (25) to be guided through.

3. Cable bushing according to Claim 1, characterized in that the wall thickness of the cylindrical wall (43) is 0.2 to 1 mm.

4. Cable bushing according to Claim 1, characterized in that the moulded part (40) and the cable insulation (27) of the connecting cable (25) consist at least partially of the same material.

5. Cable bushing according to Claim 4, characterized in that the moulded part (40) and the cable insulation (27) consist at least partially of Teflon (PTFE).

6. Cable bushing according to Claim 4, characterized in that the materials of the moulded part (40) and of the cable insulation (27) are fused on or fused to one another in such a way that a tight connection is produced.

7. Method for producing a thermostable, tight cable bushing for a housing (22), in particular for a gas sensor, having a moulded part (40) which is arranged in the housing and through which at least one connecting cable (25) having an electric conductor and a cable insulation (27) is guided, characterized in that the moulded part (40) with an inserted connecting cable (25) is subjected outside the mounting site provided on the housing (22) to a heat treatment in such a way that the cable insulation (27) can fuse on or fuse together with the moulded part (40), in that thereafter the moulded part (40) is brought into mounting position on the housing (22) with the aid of a support ring (45) inserted into an annular groove (42) constructed in the moulded part, and in that in the mounting position the housing (22) is pressed in such a way that the moulded part (40) is plugged in a gastight fashion in the housing (22).

8. Method according to Claim 7, characterized in that the fusing on or together is carried out under pressure.

## Revendications

1. Passage de câble dans un boîtier, en particulier pour un détecteur de gaz, avec un corps moulé disposé dans le boîtier à travers lequel on fait passer au moins un câble de raccordement avec un conducteur électrique et une isolation de câble, le corps moulé étant réalisé avec une rainure annulaire qui s'étend axialement dans le corps moulé en partant d'une face frontale,
caractérisé en ce que
• la rainure annulaire (42) constitue sur le corps moulé (40), en direction du boîtier (22), une paroi cylindrique (43), et
• on dispose dans la rainure annulaire (42) une bague d'appui (45).

2. Passage de câble selon la revendication 1,
caractérisé en ce que
le corps moulé (40) présente, en fonction du nombre de câbles de raccordement (25) à faire passer, des passages (41) qui s'étendent axialement.

3. Passage de câble selon la revendication 1,
caractérisé en ce que
l'épaisseur de la paroi cylindrique (43) atteint 0,2 à 1 mm.

4. Passage de câble selon la revendication 1,
caractérisé en ce que
le corps moulé (40) et l'isolation (27) du câble de raccordement (25) sont réalisés au moins en partie dans la même matière.

5. Passage de câble selon la revendication 4,
caractérisé en ce que
le corps moulé (40) et l'isolation (27) du câble sont réalisés au moins en partie en Téflon (PTFE).

6. Passage de câble selon la revendication 4,
caractérisé en ce que
les matières du corps moulé (40) et de l'isolation (27) du câble, sont fondues l'une sur l'autre ou l'une dans l'autre, d'une manière telle qu'on obtient une liaison étanche.

7. Procédé de fabrication d'un passage de câble étanche, résistant aux températures élevées, pour un boîtier 22, en particulier pour un détecteur de gaz, avec un corps moulé (40) disposé dans le boîtier, corps moulé à travers lequel on fait passer au moins un câble de raccordement (25) avec un conducteur électrique et une isolation de câble (27),
caractérisé en ce que
le corps moulé (40) avec le câble de raccordement (25) inséré dedans, est soumis à un traitement thermique en dehors de l'endroit de montage prévu sur le boîtier (22), d'une manière telle que l'isolation (27) du câble puisse fondre sur ou avec le corps moulé (40),
et en ce que
• le corps moulé (40) est ensuite mis en position de montage sur le boîtier (22), avec une bague d'appui (45) qui est insérée dans une rainure annulaire (42) réalisée sans le corps moulé, et
• en position de montage, le boîtier (22) est pressé d'une manière telle que le corps moulé (40) soit maté de façon étanche aux gaz dans le boîtier (22).

8. Procédé selon la revendication 7,
caractérisé en ce que
la fusion est réalisée sous pression.
